# EUROPEAN PATENT APPLICATION

(11) **EP 3 848 869 A1**
(43) Date of publication of application: **14.07.2021**
(21) Application number: 20150930.4
(22) Date of filing: 09.01.2020
(51) Int. Cl.: G06Q 10/10

(54) **ELECTRONIC CALENDAR SELECTION**

(71) Applicant: Microsoft Technology Licensing, LLC, Redmond, WA 98052-6399 (US)
(72) Inventor: GUPTA, Rahul, Redmond, Washington 98052-6399 (US); KANSAL, Manish, Redmond, Washington 98052-6399 (US)
(74) Representative: Flint, Adam

(57) **Abstract**

An apparatus is provided for selecting an electronic calendar from a plurality of available electronic calendars (331-333) for saving of an event (800) for a user (101). The apparatus comprises a data storage (330) storing user-specific inferences pertaining to the user (101); and a calendar suggestion module (450). The calendar suggestion module (450) is configured to: apply semantic analysis to an indication of an event (800) received at the apparatus; access the data storage (330) to identify a user-specific inference (511) that is relevant to the received event (800) based on the semantic analysis; and using the relevant user-specific inference (511), select a calendar from the plurality of calendars (331-333) to which the event (800) should be stored. A corresponding method and computer program are also provided.

## Description

### Technical Field

The present disclosure relates to an apparatus, method, and computer program for selecting an electronic calendar from a plurality of available electronic calendars for saving of an event for a user.

### Background

Calendaring software allows a user to manage one or more electronic calendars (also called digital calendars). The user may input and save an event to their calendar by inputting a title and specifying the time and date for the event. The user may also specify a duration for the event.

The user's calendar may be accessed by a user device such as a smartphone or other computing device. The calendar is presented via a user interface, thereby allowing the user to stay informed as to their schedule of events.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

According to a first aspect disclosed herein, there is provided an apparatus for selecting an electronic calendar from a plurality of available electronic calendars for saving of an event for a user, the apparatus comprising: a data storage storing user-specific inferences pertaining to the user; and a calendar suggestion module configured to: apply semantic analysis to an indication of an event received at the apparatus; access the data storage to identify a user-specific inference that is relevant to the received event based on the semantic analysis; and using the relevant user-specific inference, select a calendar from the plurality of calendars to which the event should be stored.

According to a second aspect disclosed herein, there is provided a method of selecting an electronic calendar from a plurality of available electronic calendars for saving of an event for a user, the method comprising: applying semantic analysis to an indication of an event; accessing a data storage storing user-specific inferences pertaining to the user to identify a user-specific inference that is relevant to the received event based on the semantic analysis; and using the relevant user-specific inference to select a calendar from the plurality of calendars to which the event should be stored.

According to a third aspect disclosed herein, there is provided a computer program comprising instructions such that when the computer program is executed on one or more computing devices, the one or more computing devices are arranged to carry out a method of selecting an electronic calendar from a plurality of available electronic calendars for saving of an event for a user, the method comprising: applying semantic analysis to an indication of an event; accessing a data storage storing user-specific inferences pertaining to the user to identify a user-specific inference that is relevant to the received event based on the semantic analysis; and using the relevant user-specific inference, selecting a calendar from the plurality of calendars to which the event should be stored.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically a first example of an electronic calendar system;
Figure 2 shows schematically an example of data representing an event;
Figure 3 shows schematically a second example of an electronic calendar system; and
Figure 4 shows schematically an example method according to examples described herein.

### Detailed Description

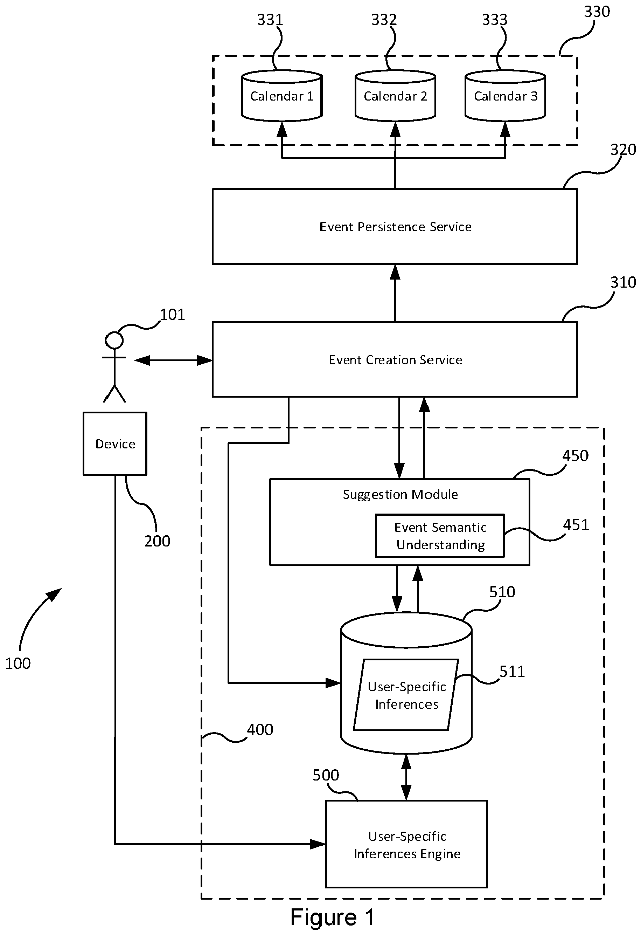

Figure 1 shows schematically an electronic calendar system 100 in accordance with examples of the present invention.

The electronic calendar system 100 comprises an event creation service 310, an event persistence service 320, a calendar storage 330, and a suggestion service 400. The suggestion service 400 comprises a suggestion module 450, a personalized data platform 510, and a user-specific inferences engine 500. The suggestion service 400 is described in more detail below. The event persistence service 320 is operatively coupled to the event creation service 310 and the calendar storage 330.

Also shown in Figure 1 is a user device 200 operated by a user 101. The user device 200 may be, for example, a smartphones, laptop computer, desktop computer, tablet computer, personal digital assistant (PDA), or a smart home device such as a smart speaker, etc. The device 200 may comprise a communications interface allowing the user device 200 to transmit and receive data. For example, the user device 200 may connect to a network (e.g. one or more of the Internet, a local area network and a cellular network) via the communications interface. The communications interface may be a wireless communications interface or may alternatively or additionally be implemented as a wired communication interface (e.g. an Ethernet connection).

A calendar application may be run on the user device 200. The calendar application may be configured to provide an electronic version of a calendar. The user can interact with the calendar application e.g. via a user interface. That is, the user interface allows the user 101 to provide user input to, and receive information from, the calendar application. The calendar application may implemented as a software module running on one or more processors of the user device 200. Alternatively, the calendar application may be implemented as software running on one or more servers to which the user device 200 can connect via at least of one wired and wireless connections to receive outputs from the calendar application and optionally to provide inputs to the calendar application.

The user device 200 may comprise a user interface allowing the user 101 to interact with the user device 200. The user interface may comprise separate devices for providing the input and output functionalities, or may comprise a single device for providing both input and output functionality. Examples of user interfaces include one or more of a display screen for displaying a calendar to the user 101, a keyboard for receiving user input from the user 101, a microphone for receiving voice commands from the user 101, a speaker for outputting audio to the user 101, a touchscreen for both displaying a calendar to the user 101 and receiving user commands by, for example, typing on the touchscreen, etc.

The calendar storage 330 is an electronic storage for storing data. Event data for events in the electronic calendar are stored in the calendar storage 330.

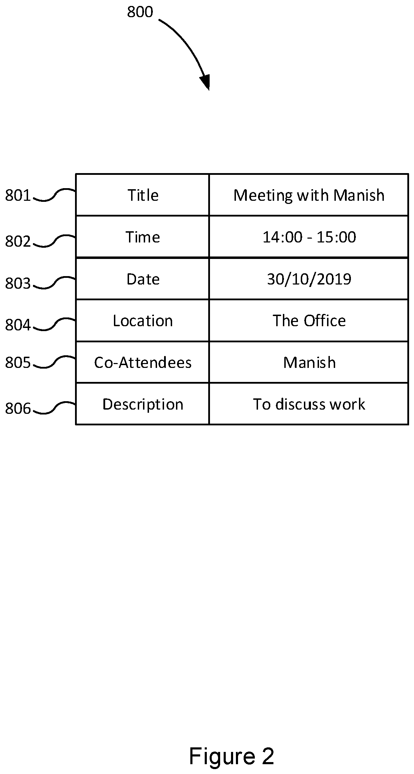

An example of data representing an event 800 (herein also referred to more simply as "an event") is shown in Figure 2. The event 800 comprises one or more fields 801-806 in which various aspects of the event are specified. In this example, the event 800 comprises a title 801, a time 802, a date 803, a location 804, a co-attendee 805, and a description 806, but any and all of these are optional. The time 802 of the event may comprise a start time and an end time, or a duration of the event.

In operation, events from the calendar storage 330 may be retrieved and presented to the user 101, e.g. via the user interface. In some examples, this may comprise rendering a calendar visually on a display screen and displaying the events accordingly. In other examples, this may comprise outputting an audible indication of the event to the user 101 via one or more speakers.

The event creation service 310 is configured to generate events based on input from the user 101, e.g. via the user device 200. For example, the user 101 may specify one or more aspects of the event via a user interface of the user device 200. In response, the event creation service 310 generates an event for the calendar in accordance with the aspects specified by the user input.

The event persistence service 320 is configured to save events generated by the event creation service 310. Specifically, the event persistence service 320 is configured to receive an event from the event creation service 310 and to store it to the calendar storage 330 for use by the calendar application in the manner described above. There are plural calendars 331-333. The calendar(s) 331-333 to which the new event is stored may be selected by the suggestion service 400, as described later below.

The various modules of the electronic calendar system 100 (the event creation service 310, event persistence service 320, calendar storage 330, suggestion module 450, personalized data platform 510, and user-specific inferences engine 500) may be implemented at either the server-side or the client-side, or in a distributed fashion cross both client and server side. The various modules of the electronic calendar system 100 may be implemented as one or more software modules.

In a first example, each of the event creation service 310, event persistence service 320, calendar storage 330, suggestion module 450, personalized data platform 510, and user-specific inferences engine 500 may be implemented on one or more servers. This is a particularly light implementation from the client side, meaning that the user device 200 can have relatively requirements for processing power and data storage requirements.

In other examples, one or more of the event creation service 310, event persistence service 320, calendar storage 330, suggestion module 450, personalized data platform 510, and user-specific inferences engine 500 may be implemented on the user device 200.

In some examples, the event creation service 310, event persistence service 320, and the calendar storage 330 may be implemented locally at the device 200 while the suggestion service 400 (the suggestion module 450, personalized data platform 510, and user-specific inferences engine 500) may be implemented on one or more servers. Other permutations are possible.

The user 101 may have multiple calendars 331-333. Event data for the different calendars may be stored in separate electronic storage locations. In the example shown in Figure 1, a first calendar 331, a second calendar 332, and a third calendar 333 are shown stored in calendar storage 330. Events from one or more of the calendars 331-333 may be retrieved and presented to the user 101, e.g. via a user interface.

For example, the user 101 may have separate calendars for work, home, family, children's school, etc. A calendar application may provide a single view or representation of these multiple calendars, e.g. on a display screen of a user interface. In some examples, events from each of the calendars 331-333 may be presented to the user 101 in different colours so that the user 101 can tell the calendar to which a particular event belongs. The calendar application may also inform the user of clashes between events (e.g. multiple events scheduled for the same time).

The suggestion service 400, which will now be described, is configured to process an event and to determine one or more of the calendars 331-333 to which it is most appropriate for that event to be stored. One advantage of this is that the user 101 does not need to manually select or otherwise specify the calendar 331-333 to which the event should be stored. The likelihood of the user 101 accidentally selecting the wrong calendar 331-333 is thereby reduced. For example, in prior art systems, the event may be automatically stored to an inappropriate calendar because it was automatically stored to a default calendar, or to a most recently-used calendar, irrespective of the nature of the actual event in question.

As mentioned above, the suggestion service 400 comprises a suggestion module 450, a personalized data platform 510, and a user-specific inferences engine 500. The personalized data platform 510 is operatively coupled to the user-specific inferences engine 500 and the suggestion module 450. The suggestion module 450 and the personalized data platform 510 are operatively coupled to the event creation service 310 described earlier.

The suggestion service 400 is configured to perform two functions. First, the suggestion service 400 is configured to process calendar data in order to derive "user-specific inferences". Secondly, the suggestion service 400 is configured to select one or more of the calendars 331-333 to which a new event should be stored by using the user-specific inferences. These two functions are described in turn below.

The user-specific inferences engine 500 collects data for the purposes of deriving user-specific inferences 511 (explained below). The data may be, for example, user data, calendar data, device data, or other data.

User data: this is data that pertains to the user 101. Examples of user data include the user's age, gender, etc. This may be referred to as part of a "user context".

Calendar data: this is data that pertains to the calendar itself, e.g. to the calendars 331-333 stored in calendar storage 330 for the user 101. Examples of calendar data include historical event data from the calendar storage 330, e.g. characteristics of past calendar events. This may be referred to as part of an "event context".

Device data: this is data that pertains to the user device 200. Examples of device data include a MAC address, and device type of the user device 200. The device data may also be part of the "user context".

Other data: other types of data may be collected by the user=specific inferences engine 500. Examples include the current time, current date, etc. A further example of other data which may be used is data identifying the application which the user has used to add an event.

Such data may be collected, for example, directly from the user device 200 or indirectly from another computing device (e.g. a server) not shown in Figure 1. In a specific example, software running on the user device 200 may provide the data to the user-specific inferences engine 500. Data may be collected on a regular basis, e.g. every time the user opens a calendar app on the user device 200, at user-specified times, or according to a schedule (e.g. on a day-to-day basis, such as once as a day).

The user-specific inferences engine 500 is configured to apply semantic analysis (including, for example, one or more machine learning or semantic understanding algorithm) to the data (user context, event context, and potentially other data, as mentioned above) in order to derive user-specific inferences 511. Semantic analysis in itself is well-known and understood. It is used in the context of the present example particularly to derive user-specific inferences 511 by considering the meaning of aspects of the input data, e.g. words in the title of the event. In particular examples, the semantic analysis may be used to identify nouns, including in particular proper nouns, such as names of people, places, etc., time of year, day, etc. The user-specific inferences 511 are then stored in the personalized data platform 510 as illustrated in Figure 1. The user-specific inferences 511 in the personalized data platform 510 are user-specific in that they relate to one and only one user (user 101 in this example).

Each user-specific inference 511 is an association between a particular characteristic of an event and a specific one or more of the calendars 331-333 for a particular user. A characteristic may be, for example, whether (or not) the time for the event falls between a specific start time and end time, or whether (or not) the title comprises a specific word or phrase. The characteristic may relate to any one or more aspects of the event (e.g. the title, time, date, location, co-attendees, description, etc.).

A non-exhaustive list of examples of user-specific inferences 511 is given in Table 1.

**Table 1**

| User- Specific Inference | Aspect | Characteristic | Calendar |
|---|---|---|---|
| 1 | Title | "Manish" | Work |
| 2 | Time | 5pm-9pm | Family |
| 3 | Time and Date | 9am-5pm, Mon-Fri | Work |
| 4 | Title | "Doctor" | Family |
| 5 | Title | "Cricket" | Social |
| 6 | Title | "Brunch" | Social |
| 7 | Location | Office | Work |
| 8 | Location | Home | Home |
| 9 | Title | "Children" | Children |

The user-specific inferences engine 500 may determine the user-specific inferences 511 by, analysing the aspects of historical event data collected by the user-specific inferences engine 500in relation to the calendar 331-333 to which each event is stored.

For example, the user-specific inferences engine 500 may analyse the titles of events stored in each calendar 331-333 in order to identify that a particular word or phrase is present in more of the titles of events in one of the calendars 331-333 than in titles of events in the other calendars 331-333. This word or phrase can therefore be used as an indicator of which calendar 331-333 is most appropriate for a newly-generated event.

In a similar manner, the user-specific inferences engine 500 may analyse the times or dates (or both) of the events stored in each calendar 331-333 to identify, for example, that events within a particular time frame are usually stored to one of the calendars 331-333, and not the other calendars 331-33.

As mentioned above, the application used by the user 101 to add a new event may contribute to a user-specific inference. For example, it may be determined that the user 101 usually selects a "work" calendar when using Outlook by Microsoft Corporation to add a calendar event, or it may be determined that the user 101 usually selects a "family" calendar when using a web-based calendar application to add a calendar event.

As a specific example, the user-specific inferences engine 500 may determine, based on the data collected by the user-specific inferences engine 500, that the user 101 always (or most often) selects a "work" calendar for events with the name "Manish" in the title. Based on this, the user-specific inferences engine 500 generates a user-specific inference 511 indicating that if "Manish" is present in the title of an event, it should be stored to the "work" calendar, and stores this user-specific inference 511 in the personalized data platform 510. This is user-specific inference number 1 in Table 1.

As another specific example, the user-specific inferences engine 500 may determine, based on data collected by the user-specific inferences engine 500, that the user 101 always (or most often) selects a "family" calendar for events occurring between 5pm and 9pm. Based on this, the user-specific inferences engine 500 generates a user-specific inference 511 indicating that if an event has a time between 5pm and 9pm, it should be stored to the "family" calendar, and stores this user-specific inference in the personalized data platform 510. This is user-specific inference number 2 in Table 1.

As another specific example, the user-specific inferences engine 500 may determine, based on the data collected by the user-specific inferences engine 500, that the user 101 always (or most often) selects a "work" calendar for events occurring between 9am and 5pm on Monday to Friday. Based on this, the user-specific inferences engine 500 generates a user-specific inference 511 indicating that if an event has a time and date between 9am and 5pm on a Monday-Friday, it should be stored to the "work" calendar, and stores this user-specific inference in the personalized data platform 510. This is user-specific inference number 3 in Table 1.

As mentioned above, the user 101 may want to add a new event to one of the calendars 331-333. In response to the user 101 instigating the new event, the calendar application calls the event creation service 310 which generates a new event based on the data input by the user 101 (title, time, date, location, co-attendees, description, etc., as input by the user 101).

The user 101 may specify one or more of the calendars 331-333 to which the new event is to be stored. In such cases, the event creation service 310 may immediately proceed to generate the event and call the event persistence service 320 to store the new event to the specified one or more calendars 331-333.

On the other hand, if the user 101 has not specified one or more of the calendars 331-333 for the new event, then the event creation service 310 passes the new event to the suggestion module 450 of the suggestion service 400. In some examples, the event creation service 310 may call the suggestion module 450 even if the user 101 has specified one or more of the calendars 331-333.

In response to receiving the new event, the suggestion module 450 calls an event semantic understanding module 451 to apply semantic understanding to the new event in order to characterize the new event into a format in which it can be compared with the user-specific inferences 511 in the personalized data platform 510. For example, the event semantic understanding module 451 may generate tokens of the event which allow the suggestion module 540 to determine whether (or not) the value in each field (where present) of the event matches a characteristic of a user-specific inference 511. For example, the event semantic understanding module 451 may break the event down into individual words or phrases (tokens) from the title, which can then be used to determine whether or not the event satisfies the characteristic of a particular user-specific inference 511.

The suggestion module 450 then accesses the personalized data platform 510 based on the results of the event semantic understanding module 451 to retrieve one or more relevant user-specific inferences 511 stored in the personalized data platform 510 previously.

The calendar(s) indicated by the one or more relevant user-specific inferences 511 are then used by the suggestion module 450 to select one or more calendars 331-333 to which the new event should be saved.

As a specific example, consider a new event which has the aspects as shown in the example event 800 of Figure 2. The event semantic understanding module 451 may generate a token of the event 800 indicating that "Manish" is present in the title aspect of the event 800. This token is then used by the suggestion module 450 to identify relevant user-specific inferences 511. Following on from the example of Table 1, this would comprise the suggestion module 450 identifying user-specific inference "1" as a relevant user-specific inference 511. Based on this user-specific inference 511, the suggestion module 450 determines that the new event should be stored to the work calendar.

In an example, the user 101 may add an event to their calendar using voice input by saying "mark an event to teach cooking to the children". In this case, the event semantic understanding module identifies the word "children" as a token to be used, and the suggestion module 450 pulls user-specific inference "9" (shown in Table 1) from personalized data platform 510. The suggestion module 450 then selects the "children" calendar to store the new event to, as this is the calendar indicated by the relevant user-specific inference 511.

The event semantic understanding module 540 may generalize the values of one or more aspects of the event using a semantic understanding algorithm.

For example, an event with the title "Avengers" may be identified as relating to a film or movie (rather than for example the dictionary definition of the word "avengers"). A corresponding token may indicate that the event relates to a movie. This token can then be used to find relevant user-specific inferences 511 indicating, for example, the calendar 311-333 to which the user 101 usually saves movie events.

Once a final one or more of the calendars 311-333 has been selected, the event creation service 310 calls the event persistence service 320 which stores the new event to the calendar 311-333 which has been determined as described above based on the user-specific inferences 511.

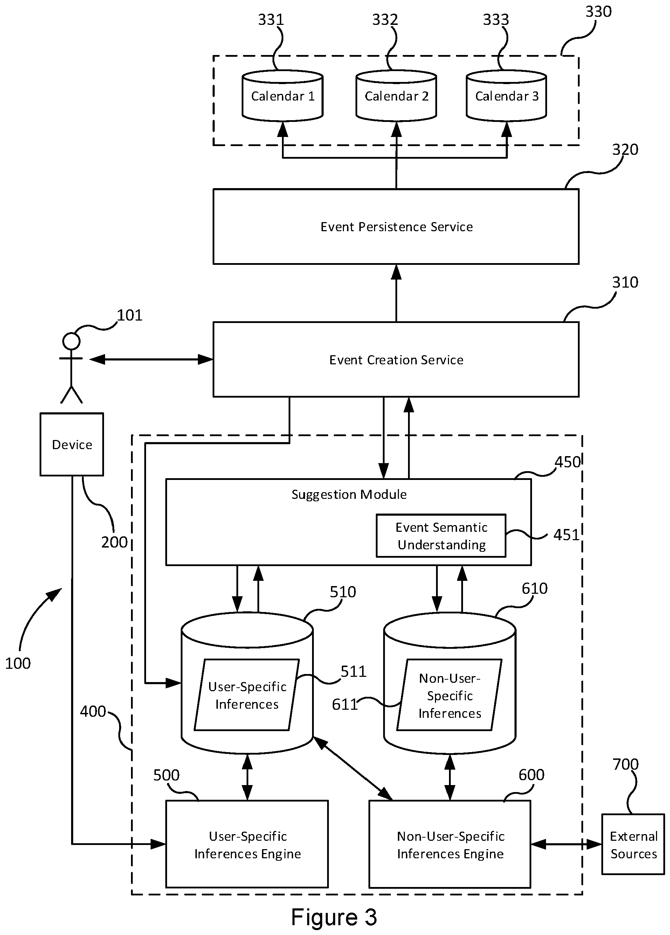

Figure 3 illustrates schematically a second example of an electronic calendar system 100. In this example, the suggestion service 400 additionally comprises a de-personalized data platform (DDP) 610, and a non-user-specific inferences engine 600. The other elements of the electronic calendar system 100 correspond to those as previously described in relation to Figure 1.

The DDP 610 is operatively coupled to the non-user-specific inferences engine 600 and the suggestion module 450. The non-user-specific inferences engine 600 is also operatively coupled to the personalized data platform 510 shown in Figure 1, and also to personalized data platforms associated with other users not shown in Figure 1.

The non-user-specific inferences engine 600 is configured to use semantic analysis (including, for example, one or more machine learning or semantic understanding algorithm) to derive non-user-specific inferences 511. The non-user-specific inferences 611 are then stored in the DDP 610 as illustrated in Figure 2. To do so, the non-user-specific inferences engine 600 may draw on a plurality of sources.

One source of data from which the non-user-specific inferences engine 600 may derive non-user-specific inferences 611 is the user-specific inferences 511 associated with a plurality of users (which may or may not include the user 101 in question).

The non-user specific inferences engine 600 may also use data from one or more external sources 700 in order to derive non-user-specific inferences 611. Examples of external sources include search engines and knowledge engines (e.g. Google, Wolfram Alpha), and the Internet/World Wide Web generally.

Unlike the user-specific inferences 511 described above, the non-user-specific inferences 611 do not relate to any particular user (such as the user 101 in question). Rather, the non-user specific inferences 611 are general statements, which apply to or can be obtained from a wider population and which can be used to identify a (likely) calendar 331-333 for an event based on one or more aspects of the event.

A non-user-specific inference 611 may be, for example, that 80% of people in Seattle aged 25-30 put doctor appointments in their family calendar.

A non-exhaustive list of examples of non-user-specific inferences 611 is given in Table 2.

**Table 2**

| Non-User- Specific Inference | User Location | User Age | Event Type | Calendar |
|---|---|---|---|---|
| 1 | Seattle | 25-30 | Doctor Appointment | Family |
| 2 | London | any | Doctor Appointment | Reminders |

The suggestion module 450 may use access the DDP 610 to retrieve relevant non-user-specific inferences 611 in a manner similar to that described above in relation to the suggestion module 450 according the personalized data platform 510 to retrieve relevant user-specific inferences 511. For example, the suggestion module 450 may retrieve relevant non-user-specific inferences 611 using the tokens generated using the event semantic understanding module 451.

The calendar(s) indicated by the one or more relevant non-user-specific inferences 611 are then used by the suggestion module 450 to select one or more calendars 331-333 to which the new event should be saved.

In some examples, the suggestion module 450 is configured to use only user-specific inferences 511 to determine the one or more calendars 331-333. In other examples, the suggestion module 450 is configured to use both user-specific inferences 511 and non-user-specific inferences 611 to determine the one or more calendars 331-333.

In some examples, the event creation service 310 may inform the calendar application of the selected calendar(s) for the new event. The calendar application then presents the selected calendar(s) to the user 101 via the user interface for the user 101 to confirm or reject the selected calendar(s). If the user 101 confirms the selected calendar(s), the calendar application informs the event creation service 310 which then proceeds to call the event persistence service 320 as described above to save the event to the selected (and confirmed) one or more calendars 331-333. Such user feedback may have an effect on future selections of calendars. For example, if the suggestion module 450 determines more than one calendar based on the user-specific inferences 511 (and, optionally, non-user-specific inferences 611), it may present all of the determined calendars to the user 101 for the user 101 to indicate which one of the calendars should be used to store the event. A future instance in which the same user-specific inferences 511 (and, optionally, non-user-specific inferences 611) are used may automatically select the calendar that was previously indicated by the user 101, without needing to present the calendars to the user 101.

In an example, one or more of the user-specific inferences 511 in the personalized data platform 510 may be associated with a priority level. In cases where the suggestion module 450 identifies plural relevant user-specific inferences 511 which indicate more than one calendar as appropriate for the new event, the suggestion module 450 is configured to select the calendar indicated by the user-specific inference 511 with the highest priority level.

If the priority levels of the user-specific inferences 511 are the same (or no priority levels yet exist), then the plural possible calendars may be presented to the user 101 for the user 101 to make a selection, as described above. In response to the user 101 indicating a particular one of the calendars 331-333, the one or more user-specific inference 511 which indicated that calendar may be given a higher priority in the personalized data platform 510.

In an example, the suggestion module 450 is configured to determine a confidence level for each of the plurality of available calendars based on the user-specific inferences 511 (and optionally the non-user-specific inferences 611). The suggestion module 450 may then select the calendar from the plurality of calendars to which the event should be stored by selecting the calendar with the highest confidence level. This may occur if, for example, the suggestion module 450 identifies three relevant user-specific inferences 511, two of which indicate the "work" calendar, and one which indicates the "family" calendar.

In such cases, the suggestion module 450 may provide an indication of the possible calendars and their associated confidence levels to the event creation service 310. The event creation service 310 may then present the possible calendars to the user 101 as described above in order for the user 101 to confirm the calendar to which the event should be saved. If the confidence level indicates one of the calendars with 100% confidence, then this calendar may be automatically selected without seeking user feedback.

In general, the confidence level may be rule-based, based on, for example, one or more of: historical data, the age of data, and the user feedback described above. Machine learning may be used to adapt the confidence levels over time based on the user feedback described above.

In response to the user 101 indicating a particular one of the calendars 331-333, the one or more user-specific inference 511 which indicated that calendar may be given a higher priority in the personalized data platform 510.

Although the above has been described in relation to the user 101 instigating the saving of a new event, it is appreciated that the suggestion service 450 is able to select an appropriate one or more calendars for any event, however it is received by the suggestion service 450. For example, the user 101 may accept an invitation to an event from another user. The accepted event may then be provided to the suggestion module 450 to determine which of calendar of the user 101 it should be saved to. In another example, the user 101 may share a calendar with another user. In such cases, if the other user adds a new event to the shared calendar, it is received by the calendar application of the first user 101, which may then pass the shared event to the suggestion module 450 in order to determine which calendar the shared event should be saved to (e.g. if the calendar should be move out of the shared calendar and into a more appropriate calendar). The shared event may remain in the shared calendar, i.e. it may be copied to the calendar selected by the suggestion module 450.

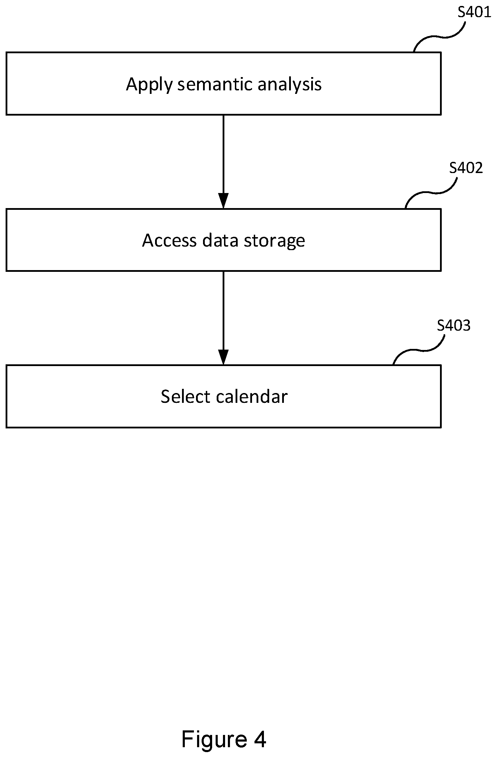

Figure 4 shows schematically an example method according to examples described herein. The method may be performed by the suggestion module 450 described above.

At S401, the suggestion module 450 applies semantic analysis to an indication of an event.

At S402, the suggestion module 450 accesses the personalized data platform 510 to identify a user-specific inference 511 that is relevant to the event based on the semantic analysis.

At S403, the suggestion module 450 uses the relevant user-specific inference 511 to select a calendar from the plurality of calendars 331-333 to which the event should be stored.

According to aspects disclosed herein, there is provided an apparatus for selecting an electronic calendar from a plurality of available electronic calendars for saving of an event for a user. The apparatus comprises a data storage storing user-specific inferences pertaining to the user and a calendar suggestion module. The calendar suggestion module is configured to apply semantic analysis to an indication of an event received at the apparatus; access the data storage to identify a user-specific inference that is relevant to the received event based on the semantic analysis; and using the relevant user-specific inference, select a calendar from the plurality of calendars to which the event should be stored.

The calendar suggestion module selects the calendar from the plurality of calendars by selecting the calendar associated with the relevant user-specific inference.

In an example, each of the user-specific inferences stored in the data storage comprises an association between at least one of the plurality of available electronic calendars and a characteristic of the event, the user-specific inferences having been generated by applying semantic analysis to event data stored for that user in the plurality of available calendars.

In an example, the event characteristics relate to one or more of a title of the event, a subject of the event, a time of the event, a location of the event and a date of the event.

In an example, the apparatus stores non-user-specific inferences; wherein the calendar suggestion module is configured to: access the stored non-user-specific inferences to identify a non-user-specific inference that is relevant to the received event based on the semantic analysis; and use both the relevant user-specific inference and the relevant non-user-specific inference to select the calendar from the plurality of calendars to which the event should be stored.

In an example, each of the stored non-user-specific inferences has been generated based on analysing user-specific inferences for more than one user.

In an example, the calendar suggestion module is configured to generate one or more corresponding tokens for the event based on the semantic analysis, and access the data storage to identify a user-specific inference based on at least one of the generated tokens corresponding to the event.

In an example, the calendar suggestion module is configured to identify the relevant user-specific inference as a user-specific inference which has an event characteristic which matches the one or more tokens.

In an example, the calendar suggestion module is configured to determine a confidence level for each of the plurality of available calendars based on the relevant user-specific inference, and to select the calendar from the plurality of calendars to which the event should be stored by selecting the calendar with the highest confidence level.

According to other aspects disclosed herein, there is provided a method of selecting an electronic calendar from a plurality of available electronic calendars for saving of an event for a user. The method comprises applying semantic analysis to an indication of an event; accessing a data storage storing user-specific inferences pertaining to the user to identify a user-specific inference that is relevant to the received event based on the semantic analysis; and using the relevant user-specific inference to select a calendar from the plurality of calendars to which the event should be stored.

In an example, the method comprises determining a confidence level for each of the plurality of available calendars based on the relevant user-specific inference, and selecting the calendar from the plurality of calendars to which the event should be stored by selecting the calendar with the highest confidence level.

In an example, the method comprises receiving the indication of the event from a user, and only selecting the electronic calendar when the user has not specified a calendar to which the event is to be stored.

In an example, the method comprises presenting the selected calendar to the user via a user interface for the user to confirm or reject the selected calendar as the calendar to which the event is to be stored; and storing the event to the selected calendar in response to user input from the user confirming the selected calendar.

In an example, each user influence in the data storage is associated with a priority level, and the method comprises associating the relevant user-specific inference with a higher priority level in response to the user confirming the selected calendar, and a lower priority level in response to the user rejecting the selected calendar.

In an example, the method comprises: accessing stored non-user-specific inferences to identify a non-user-specific inference that is relevant to the received event based on the semantic analysis; and using both the relevant user-specific inference and the relevant non-user-specific inference to select the calendar from the plurality of calendars to which the event should be stored.

According to another aspect disclosed herein, there is provided a computer program comprising instructions such that when the computer program is executed on one or more computing devices. The one or more computing devices are arranged to carry out a method of selecting an electronic calendar from a plurality of available electronic calendars for saving of an event for a user. The method comprises applying semantic analysis to an indication of an event; accessing a data storage storing user-specific inferences pertaining to the user to identify a user-specific inference that is relevant to the received event based on the semantic analysis; and using the relevant user-specific inference, selecting a calendar from the plurality of calendars to which the event should be stored.

There is also provided a non-transitory computer-readable storage medium storing a computer program as described above.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for selecting an electronic calendar from a plurality of available electronic calendars for saving of an event for a user, the apparatus comprising:
a data storage storing user-specific inferences pertaining to the user; and
a calendar suggestion module configured to:
apply semantic analysis to an indication of an event received at the apparatus;
access the data storage to identify a user-specific inference that is relevant to the received event based on the semantic analysis; and
using the relevant user-specific inference, select a calendar from the plurality of calendars to which the event should be stored.

2. An apparatus according to claim 1, wherein each of the user-specific inferences stored in the data storage comprises an association between at least one of the plurality of available electronic calendars and a characteristic of the event, the user-specific inferences having been generated by applying semantic analysis to event data stored for that user in the plurality of available calendars.

3. An apparatus according to claim 2 or claim 3, wherein the event characteristics relate to one or more of a title of the event, a subject of the event, a time of the event, a location of the event and a date of the event.

4. An apparatus according to any of claims 1 to 3, the apparatus storing non-user-specific inferences; wherein the calendar suggestion module is configured to:
access the stored non-user-specific inferences to identify a non-user-specific inference that is relevant to the received event based on the semantic analysis; and
use both the relevant user-specific inference and the relevant non-user-specific inference to select the calendar from the plurality of calendars to which the event should be stored.

5. An apparatus according to claim 4, wherein each of the stored non-user-specific inferences has been generated based on analysing user-specific inferences for more than one user.

6. An apparatus according to any of claims 1 to 5, wherein the calendar suggestion module is configured to generate one or more corresponding tokens for the event based on the semantic analysis, and access the data storage to identify a user-specific inference based on at least one of the generated tokens corresponding to the event.

7. An apparatus according to claim 6, wherein the calendar suggestion module is configured to identify the relevant user-specific inference as a user-specific inference which has an event characteristic which matches the one or more tokens.

8. An apparatus according to any of claims 1 to 7, wherein the calendar suggestion module is configured to determine a confidence level for each of the plurality of available calendars based on the relevant user-specific inference, and to select the calendar from the plurality of calendars to which the event should be stored by selecting the calendar with the highest confidence level.

9. A method of selecting an electronic calendar from a plurality of available electronic calendars for saving of an event for a user, the method comprising:
applying semantic analysis to an indication of an event;
accessing a data storage storing user-specific inferences pertaining to the user to identify a user-specific inference that is relevant to the received event based on the semantic analysis; and
using the relevant user-specific inference to select a calendar from the plurality of calendars to which the event should be stored.

10. A method according to claim 9, comprising determining a confidence level for each of the plurality of available calendars based on the relevant user-specific inference, and selecting the calendar from the plurality of calendars to which the event should be stored by selecting the calendar with the highest confidence level.

11. A method according to claim 9 or claim 10, comprising receiving the indication of the event from a user, and only selecting the electronic calendar when the user has not specified a calendar to which the event is to be stored.

12. A method according to any of claims 9 to 11, comprising presenting the selected calendar to the user via a user interface for the user to confirm or reject the selected calendar as the calendar to which the event is to be stored; and storing the event to the selected calendar in response to user input from the user confirming the selected calendar.

13. A method according to claim 12, wherein each user influence in the data storage is associated with a priority level, and the method comprises associating the relevant user-specific inference with a higher priority level in response to the user confirming the selected calendar, and a lower priority level in response to the user rejecting the selected calendar.

14. A method according to any of claims 9 to 13, comprising:
accessing stored non-user-specific inferences to identify a non-user-specific inference that is relevant to the received event based on the semantic analysis; and
using both the relevant user-specific inference and the relevant non-user-specific inference to select the calendar from the plurality of calendars to which the event should be stored.

15. A computer program comprising instructions such that when the computer program is executed on one or more computing devices, the one or more computing devices are arranged to carry out a method of selecting an electronic calendar from a plurality of available electronic calendars for saving of an event for a user, the method comprising:
applying semantic analysis to an indication of an event;
accessing a data storage storing user-specific inferences pertaining to the user to identify a user-specific inference that is relevant to the received event based on the semantic analysis; and
using the relevant user-specific inference, selecting a calendar from the plurality of calendars to which the event should be stored.
